# EUROPEAN PATENT SPECIFICATION

(11) **EP 2 774 313 B1**
(45) Date of publication and mention of the grant of the patent: **25.03.2015**
(21) Application number: 12790971.1
(22) Date of filing: 01.11.2012
(51) Int. Cl.: H04L 9/08

(54) **ELECTRONIC CONTENT DISTRIBUTION BASED ON SECRET SHARING**
ELEKTRONISCHE INHALTSVERTEILUNG AUF DER BASIS DER GEMEINSAMEN NUTZUNG GEHEIMER INFORMATIONEN
DISTRIBUTION DE CONTENU ÉLECTRONIQUE BASÉE SUR LE PARTAGE DE SECRET

(30) Priority: 06.11.2011 IL 21616211; 29.08.2012 GB 201215327
(43) Date of publication of application: 10.09.2014
(73) Proprietor: NDS Limited, Staines, Middlesex TW18 4EX (GB)
(72) Inventor: SOLOW, Hillel, 99543 Beit Shemesh (IL); CAIN, Harel, 93627 Jerusalem (IL); HIBSHOOSH, Eliphaz, 63562 Tel Aviv (IL)
(74) Representative: Watterson, Peer Marten John
(86) International application number: PCT/IB2012/056079
(87) International publication number: WO 2013/065008

(56) References cited:
- US-A- 5 764 767
- US-A1- 2010 217 978
- US-A1- 2011 019 822
- ADI SHAMIR: "HOW TO SHARE A SECRET", COMMUNICATIONS OF THE ACM, ASSOCIATION FOR COMPUTING MACHINERY, INC, UNITED STATES, vol. 22, no. 11, 1 November 1979 (1979-11-01), page 612/613, XP000565227, ISSN: 0001-0782, DOI: 10.1145/359168.359176 cited in the application

## Description

### FIELD OF THE INVENTION

The present invention relates generally to digital communications, and specifically to methods and systems for secure distribution of digital information.

### BACKGROUND

In secret sharing schemes, a secret (such as a cryptographic key) is shared among a group of participants, each of whom is allocated a share of the secret. The secret can be reconstructed only when a sufficient number of secret-shares are combined together, while individual shares are of no use on their own.

A method for secret sharing based on polynomials, for example, was described by Shamir in "How to Share a Secret," Communications of the ACM 22:11 (1979), pages 612-613. According to this method, a secret *S* is divided into *n* parts, which are chosen in such a way that any subset containing *k* of the parts can be used to reconstruct the secret. Any suitable values of *n* and *k* ≤ *n* may be chosen, and the secret sharing scheme is designed accordingly.

Specifically, if *S* is an element of a finite field *F,* the scheme may be based on a polynomial *f*(*x*) with random coefficients *a*₁,···_{,}*a*_{*k*-1} in *F,* of the form: *f*(*x*)=*a*₀+*a*₁*x*+*a*₂*x*²+*a*₃*x*³+···+a_{*k-*1}*x*^{*k*-1}, with *a*₀ = *S.* The *n* secret-shares in this case have the form {*i,f*(*i*)}, i.e., values of the polynomial *f* computed for *n* different known elements *i* of *F.* If *k* of these secret-shares are known, they can be used to find the coefficients of the polynomial by interpolation, and thus to reconstruct the secret value of *a*₀. This scheme of secret sharing has been shown to be secure, in the sense that reconstructing the secret using less than *k* shares is, in general, computationally infeasible.

Other methods of secret sharing are also known in the art. For example, U.S. Patent Application Publication 2010/0217978 describes a method and system for distributing a secret to a plurality of computing systems. The method chooses n coprime random bit strings in any one of various general rings as moduli, the general rings including one or more non-integer rings. The secret is then embedded in a bit string that is at least one bit longer than the product of any k-1 moduli and at least one bit shorter than the product of any k moduli. Each share includes one of the moduli and a corresponding remainder.

As another example, U.S. Patent 5,764,767 describes a method for reconstructing a secret, over a public communication channel, using a perfect t-out-of-n secret sharing scheme. The scheme privately delivers n secret shares of the secret along with n keys to n participants that are interlinked by the channel. The scheme has a secret reconstructing procedure, executed by selected recipient participants, for reconstructing the secret by utilizing the secret share of the recipient participant and 1-1 secret shares of the other participants.

The Fiat-Shamir identification scheme is a type of parallel zero-knowledge proof that allows a first party to prove to a second party that the first party possesses secret information without revealing to the second party what that secret information is. It was described by Feige, Fiat and Shamir in "Zero-Knowledge Proofs of Identity," Journal of Cryptology 1:2 (1988).

Broadcast encryption addresses the problem of encrypting broadcast content in such a way that only qualified users will be able to decrypt it. Some schemes for this purpose use an array of keys that are arranged in a binary tree, as described, for example, in Advance Access Content System (AACS): Introduction and Common Cryptographic Elements Book (Revision 0.951, 2009), as well as in other books in the AACS series, which are distributed by AACS LA LLC and are available at www.aacsla.com.

US 2011/0019822 A1 describes a prior-art solution for the distribution of protected electronic information.

### SUMMARY

Embodiments of the present invention that are described hereinbelow provide methods, systems and software for secure distribution of information using secret sharing.

There is therefore provided, in accordance with an embodiment of the present invention, a method for distributing information, which includes distributing an item of encrypted information to a plurality of clients. Respective key-shares are distributed to the clients, such that each client will require a key-share that has been distributed to at least one other client in order to reconstruct a key for decrypting the encrypted information. Upon receiving from a first client a report that a second client requested and received a respective one of the key-shares from the first client, a server makes a record, responsively to the report, of a delivery of the item to the second client.

In a disclosed embodiment, distributing the key-shares includes generating and distributing respective secret-shares to the clients, such that a predetermined number of no less than two of the secret-shares are required in order to reconstruct a key to decrypt the encrypted information.

In another embodiment, distributing the key-shares includes generating a binary tree, such that the key-shares are associated with respective ancestor nodes in the tree, and each client has a respective client key associated with a respective leaf of the tree, which is derivable from the ancestor nodes by a predetermined one-way function. The key-share distributed to each client is not associated with an ancestor node of the respective leaf that is associated with the respective client key of the client. The item may be encrypted using a content key, and the method may include, for each client, encrypting the content key for the client using the respective client key, and conveying the encrypted content key to the client.

In some embodiments, receiving the report includes receiving a message from the first client over a communication network, indicating that the respective one of the key-shares was requested and transmitted to the second client while the first client was disconnected from the communication network. Distributing the item may include pushing the item to the clients while the clients are connected to the communication network.

Making the record may include verifying that the second client also reported that the item was delivered to the second client. Additionally or alternatively, the method may include providing an incentive to the first client for providing the report.

There is also provided, in accordance with an embodiment of the present invention, a method for processing information, which includes receiving at a first client an item of encrypted information distributed to a plurality of clients. The first client receives a given key-share from among multiple, respective key shares distributed to the clients, such that each client requires a key-share that has been distributed to at least one other client in order to reconstruct a key for decrypting the encrypted information. Upon receiving at the first client a request from a second client to convey the first key-share from the first client to the second client, the first client conveys the given key-share, responsively to the request, to the second client and reports to a server that the given key-share has been conveyed to the second client.

In some embodiments, reporting to the server includes transmitting a message from the first client to the server over a wide-area communication network, and conveying the first key-share includes transmitting the given key-share from the first client to the second client over a local communication link, independent of the wide-area communication network, between the first and second clients. In one embodiment, transmitting the given key-share includes communicating over the local communication link while at least the first client is disconnected from the wide-area communication network, and transmitting the message includes establishing communications between the first client and the server after the given key-share has been transmitted to the second client. Typically, the item is received at the clients over the wide-area communication network while the clients are connected to the wide-area network, prior to transmitting the first key share to the second client.

In a disclosed embodiment, receiving the request includes receiving at the first client an authenticated identification of the second client, which is used by the first client in reporting to the server. Additionally or alternatively, conveying the given key-share may include exchanging the given key-share for another key-share conveyed from the second client to the first client.

There is additionally provided, in accordance with an embodiment of the present invention, apparatus for distributing information, including a communication interface, which is configured to be coupled to a communication network so as to distribute, over the network, an item of encrypted information to a plurality of clients and to distribute over the network respective key-shares to the clients, such that each client will require a key-share that has been distributed to at least one other client in order to reconstruct a key for decrypting the encrypted information. A processor is configured to receive over the communication network from a first client a report that a second client requested and received a respective one of the key-shares from the first client, and to making a record of a delivery of the item to the second client responsively to the report.

There is further provided, in accordance with an embodiment of the present invention, apparatus configured to operate as a first client. The apparatus includes a communication interface, which is configured to receive an item of encrypted information distributed over a network to a plurality of clients and to receive a given key-share from among multiple, respective key shares distributed to the clients, such that each client requires a key-share that has been distributed to at least one other client in order to reconstruct a key for decrypting the encrypted information. A processor is configured to receive a request from a second client to convey the given key-share to the second client and responsively to the request, to convey the given key-share to the second client and to report to a server that the given key-share has been conveyed to the second client.

The present invention will be more fully understood from the following detailed description of the embodiments thereof, taken together with the drawings in which:

### BRIEF DESCRIPTION OF THE DRAWINGS

Fig. 1 is a schematic, pictorial illustration of a content distribution system, in accordance with an embodiment of the present invention;
Fig. 2 is a block diagram that schematically illustrates a client device, in accordance with an embodiment of the present invention;
Fig. 3 is a flow chart that schematically illustrates a method for distributing encrypted content and key-shares, in accordance with an embodiment of the present invention;
Fig. 4 is a flow chart that schematically illustrates a method for decrypting encrypted content using key-shares, in accordance with an embodiment of the present invention; and
Fig. 5 is a flow chart that schematically illustrates a method for distributing encrypted content and key-shares, in accordance with another embodiment of the present invention.

### DETAILED DESCRIPTION OF EMBODIMENTS

### OVERVIEW

Content distributors, who sell information content such as books, newspaper articles, video, and music to users of client devices (referred to hereinbelow simply as "clients"), often wish to push content to clients in advance of purchase. After an item of content has been received in the client, the user is then offered the opportunity to purchase the item at some subsequent time. In many cases, the purchase can be resolved on-line by communication between the client and a server over a wide-area network. In other cases, however, it may be desirable to allow content acquisition even when the client is not connected to the server. This sort of off-line purchase could be reported by the purchasing client subsequently, after the connection to the server has been reestablished, but such a scheme requires strong security, which typically depends on trusted security hardware in each client device and is vulnerable to hacking.

Embodiments of the present invention that are described hereinbelow provide an alternative scheme, which is based on collaboration between clients over a local communication link and can support off-line purchase of pre-delivered content items with a high level of security. Content is distributed in encrypted form, and access to the content is controlled by requiring clients to collaborate in order to enable one other to decrypt the content off-line. Whenever connectivity is available, "honest" clients will report back to the server on the off-line transactions in which they were involved - whether as the purchaser or as a collaborator.

Thus, even a hacked device cannot access the encrypted content on its own, and as long as one honest client is involved in collaboration with the hacked device, the server will receive a report of the transaction. The number of collaborating clients necessary, as well as other collaboration parameters, can be adjusted to make it difficult for even a pair of hacked devices to succeed in a collaborative attack on system security. In other words, although it may remain possible for a sufficiently large cohort of hacked devices to access certain content without reporting, the system parameters may be chosen so as to achieve a desired level of security without making content access excessively difficult or burdensome for honest clients. By the same token, the keys required to access different content items are chosen uniformly, randomly and independently within a key space that is large enough to avoid the possibility that a key that is designated for accessing one item might also be usable to access another, different item. Thus, the reliability of reporting is enhanced, and potential revenue loss due to unreported off-line purchases is reduced.

In the disclosed embodiments, an item of encrypted information is distributed over a wide-area network to multiple clients, who also receive respective key-shares. The key-shares are generated in such a way that each client will require at least one key-share that has been distributed to at least one other client (and possibly multiple respective key-shares from multiple clients) in order to reconstruct the key that is needed to decrypt the encrypted information. The term "key-share" is used in the context of the present description and in the claims to refer to a piece of secret data that may be used to reconstruct a decryption key. In some of the embodiments described below, the key-shares are secret-shares, which may be computed using the methods described above in the Background section, for example, or by any other suitable method of secret sharing that is known in the art. Alternatively, they key-shares may be generated using a binary tree, as described below, or by any other method that is compatible with the collaboration model explained herein.

When such a key-sharing method is used, a client wishing to access an information item will attempt to communicate with one or more other clients over a local communication link (typically a wireless link, such as a Bluetooth® connection). This local link may be independent of the wide-area network that is used to distribute the information and report transactions. Once a local communication link has been established, the client identifies itself and requests the other clients' key-shares. Upon receiving such a request, an "honest" client will convey its key-share to the requesting client and will save the transaction information in its memory, including the information item in question and the identity of the requesting client. This interaction between clients may take place while one or more of the clients are disconnected from the wide-area network and are thus unable to communicate with a server that is responsible for recording such transactions. The interaction may involve an exchange of key-shares among two or more clients, whereby each client receives the other clients' key-shares - for the same information item or different information items - and is thus able to decrypt a desired information item.

After connecting (or re-connecting) to the wide-area network and thus to the server, honest clients will report the transaction, indicating to the server that a certain client requested and received a key-share in order to decrypt a certain item of information. Based on this report, the server makes a record of the delivery of the item to the receiving client and may attempt to verify that the client who received the item also reported the transaction. Thus, the record made by the server may, for example, serve as the basis for billing the client and/or for enforcement activity against dishonest clients who do not report (and pay for) transactions. Additionally or alternatively, the server may provide an incentive to the honest reporting client for providing the report, such as reducing the complication and/or cost of subsequent information access for the honest client. For example, the server may grant the honest client more key-shares in the future, thus making the client less reliant on other devices and possibly even totally self-sufficient for some pieces of content.

### SYSTEM DESCRIPTION

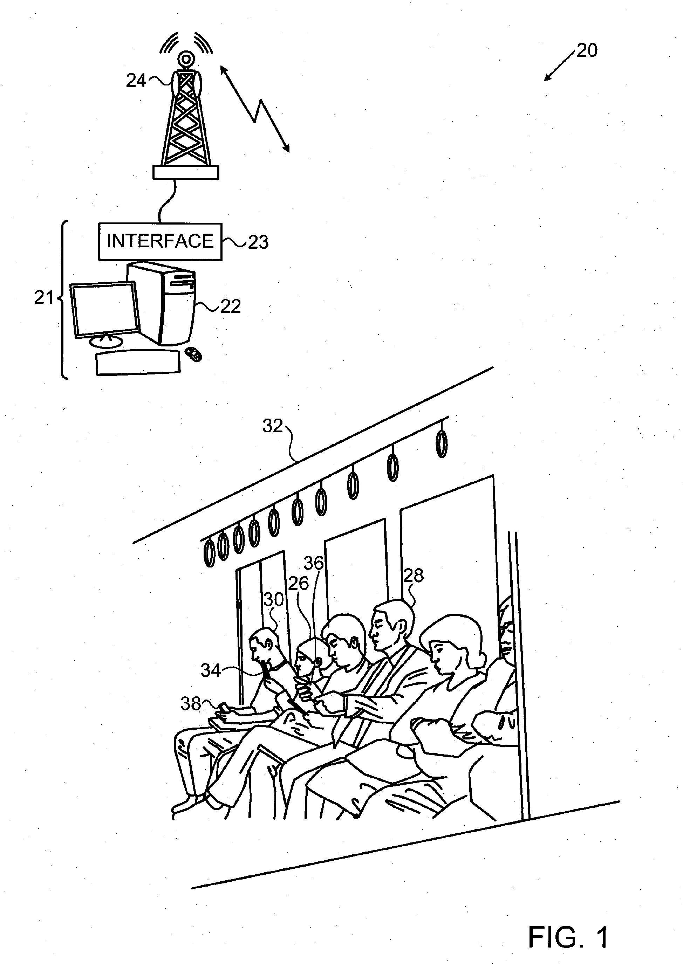

Fig. 1 is a schematic, pictorial illustration of a content distribution system 20, in accordance with an embodiment of the present invention. In this embodiment, a content server 21 comprises a processor 22 and a network interface 23, which connects to a wide-area network 24, such as a cellular communication network. Server 21 typically comprises a general-purpose computer with suitable input and output interfaces, as is known in the art. Although only a single computer is shown in Fig. 1, the functions of the server may be distributed among a cluster of computers or even among a number of different computers at different locations. The term "server," as used in the present description and in the claims, should be understood as covering all such multi-computer server configurations.

Processor 22 is programmed in software to carry out the functions that are described herein. This software may be downloaded to the processor in electronic form, over a network, for example. Additionally or alternatively, the software may be stored on tangible, non-transitory computer-readable media, such as magnetic, optical or electronic memory. Further additionally or alternatively, at least some of the functions of the processor may be implemented in programmable or hard-wired logic circuits.

In the pictured embodiment, passengers 26, 28, 30, ..., riding in a subway train 32, are using respective portable client devices 34, 36, 38, ... (also referred to simply as "clients," as noted above). These client devices may comprise, for example, smart phones, personal digital assistants, media players, tablet computers, or any other suitable sort of personal communication and computing device. While devices 34, 36, 38 are inside the subway, they are disconnected from network 24 and are thus unable to communicate with server 21. Typically, however, devices 34, 36, 38 are capable of establishing short-range, local communication links with one another, via built-in Bluetooth or other, similar sorts of interfaces.

In a typical scenario, server 21, which is operated by a content aggregator, pushes items of information to clients 34, 36, 38 while the clients are connected to network 24 (before entering the subway in the present example). These items of information typically comprise content, such as video entertainment programs, music, books and/or articles. The content is encrypted, so that the clients cannot access it without first obtaining a suitable key. The available content may be listed on a menu that appears on the screen of the client device. In order to access a particular item of information, the respective passenger 26, 28, 30 is required to purchase the key. Server 21 records the purchase transaction and charges the passenger's account accordingly.

While clients 34, 36, 38 are connected to network 24, it may be possible for them to carry out the purchase transaction on-line, by direct interaction with server 21. In subway 32, however, such on-line purchase may not be possible, and similar situations may arise in other environments, such as in an airplane or other public locations without access to a cellular or other wide-area network. Furthermore, in such environments, a user of a client device may see an item of content playing on another user's device and may be particularly tempted to purchase and view the item himself. (Although the present embodiment relates to accessing content items while clients are off-line, such access methods may also be used while clients are connected to network 24.)

In an example scenario, user 26 chooses an item of information from a menu of pre-loaded content that is stored on client 34. Client 34 attempts to establish local wireless links, such as Bluetooth connections, with clients 36 and 38. Client 34 then queries clients 36 and 38 as to whether they have key-shares for the item that user 26 has selected. Alternatively or additionally, clients 36 and 38 may provide lists of the key-shares that they hold. This process of query and response between client 34 and clients 36 and 38 typically involves the authenticated exchange of unique, secure identifiers between the clients. The key-shares may be signed by server 21, using a secure digital signature, in order to enable client 34 to verify that they are trustworthy (i.e., they are authentic key-shares and do not contain malicious code).

Upon discovering that one or both of clients 36 and 38 have key-shares for the requested item, client 34 requests these key-shares, and the responding clients send their key-shares to client 34 and make a record of the key-share transfer. Optionally, client 34 may send its key-share for the requested item to clients 36 and 38 at the same time, or for other items requested by clients 36 and/or 38. Client 34 attempts to reconstruct the key for the requested item and, if successful, decrypts and plays the item. At some time after clients 34, 36, 38 reconnect to network 24 (upon exiting subway 32, for example), they report the transaction to server 21, which charges client 34 for purchase of the selected item. Even if client 34 fails to report the purchase (by running software that has been hacked, for example, to avoid reporting off-line purchases), client 36 and/or 38 will still submit a report, leading server 21 to make a record of the purchase.

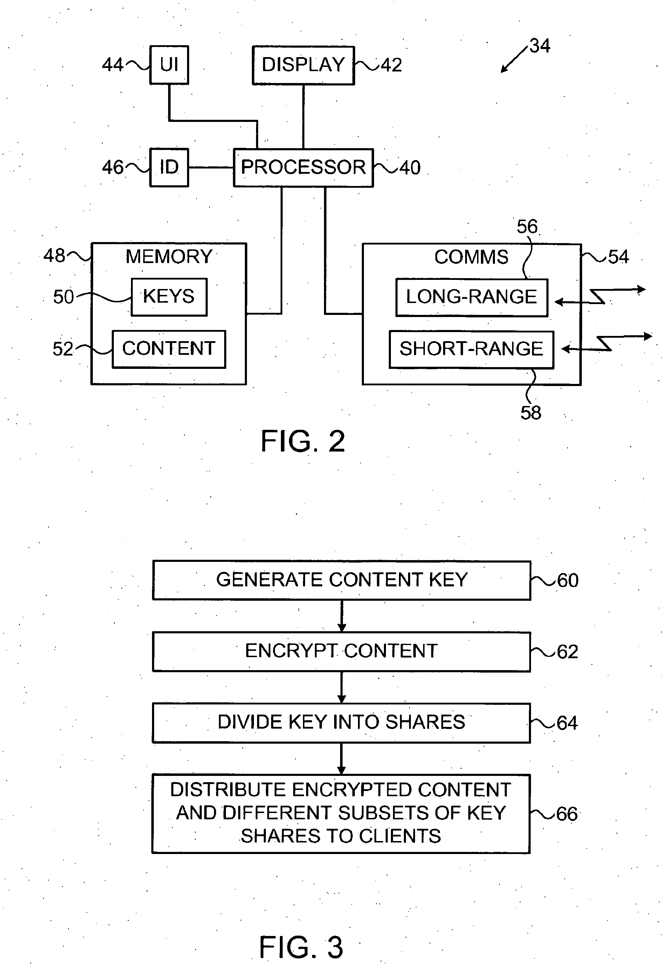

Fig. 2 is a block diagram that schematically shows functional details of client 34, in accordance with an embodiment of the present invention. Although the functional components of client 34 are shown as separate blocks in the figure, in practice at least some of the components may be implemented together in a single integrated circuit chip, or in a set of chips. Client 34 comprises a processor 40, such as an embedded microprocessor, which carries out the key-share exchange protocol and decryption functions that are described herein. Processor 40 may be programmed in software to perform these functions, wherein the software may be downloaded to client 34 in electronic form and/or stored in tangible, non-transitory computer-readable media. Additionally or alternatively, at least some of the functions of processor 40 may be carried out by dedicated digital logic circuits, which may be hard-wired or programmable.

Processor 40 drives a display 42 (which may include both visual and audio components) to present information to user 26, under control of a user interface 44. For this purpose, processor 40 writes and reads data to and from a memory 48, including both key-shares 50 and content 52, as well as software code. Content 52 may be downloaded to client 34 and stored in memory 48 in encrypted form, and may then be decrypted by processor 40 after client 34 has obtained the necessary key-shares. In addition, a unique, secure identifier 46, such as a particular alphanumeric code, is stored in a secure memory register. Client 34 is designed, using techniques that are known in the art, so as to inhibit tampering with identifier 46 and to ensure that if client 34 is hacked in an attempt to change this identifier, other clients will recognize the messages that they receive from client 34 as invalid and will refuse to provide key-shares requested by client 34. Protection of identifier 46 can be achieved, for example, by using anti-tampering circuitry, such as secure, one-time programmable or other read-only memory, which may be protected by special hardware, and obfuscated hardware layout; as well as software-based measures, such as strongly obfuscating software, self-integrity checks and self-timing measurements; and possibly by coupling identifier 46 with other identifiers that already exist on the client and are also hard to spoof. Additionally or alternatively, cloned identifiers may be identified on the server side by analyzing the logs of clients connecting to the server.

Processor 40 operates communication interfaces 54 to receive information, exchange key-shares, and report transactions. A long-range communication interface 56, such as a cellular or satellite network interface, communicates with network 24. Alternatively or additionally, network 24 may comprise a terrestrial network, such as the public Internet, and interfaces 54 may communicate with network 24 through a wireless local area network (WLAN) access point (not shown). Processor 40 operates a short-range communication interface 58, such as a Bluetooth interface, to communicate with other clients.

Fig. 3 is a flow chart that schematically illustrates a method carried out by server 21 for distributing encrypted content and key-shares, in accordance with an embodiment of the present invention. For every item of information (also referred to as a content item) Cᵢ, server 21 generates a corresponding content key Sᵢ, at a key generation step 60. As noted earlier, the content keys are different and disjoint, so that Sᵢ can be used only to decrypt Cᵢ, but not any other Cⱼ. The server encrypts Cᵢ using the corresponding content key, to generate an encrypted item E_{Si}(Cᵢ), at an encryption step 62. Any suitable encryption algorithm may be used for this purpose, such as the Advanced Encryption Standard (AES) or any other suitable method that is known in the art.

Server 21 generates multiple secret-shares for key Sᵢ, at a share generation step 64. Any suitable method of secret-sharing that is known in the art may be used at this step, such the methods that were described above in the Background section. For this purpose, the operator of server 21 sets parameters K (the number of secret-shares needed to reconstruct Sᵢ, K≥2) and N (the total number of secret-shares to be distributed, N>K), and chooses a parameter H, which is the number of secret-shares to be distributed to each client (H<K). The server generates and distributes the respective secret-shares to the clients in accordance with these parameters. H is chosen so that given a target number B of clients collaborating (as described above) to reconstruct the key Sᵢ, there is a reasonable probability, typically no less than 50%, that they will succeed. It can be shown, for example, that setting N=9, K=6 and H=4, then for B=3, the probability that collaborative reconstruction of the key will fail can be no greater than about 59%.

Server 21 distributes the encrypted item E_{Si}(Cᵢ) to clients 34, 36, 38, ..., at a content distribution step 66. Together with this item, the server distributes to each client a subset of H secret-shares out of the N available secret-shares for Sᵢ. Typically, the secret-shares in each subset are chosen at random, and the N secret-shares are uniformly distributed over the subsets.

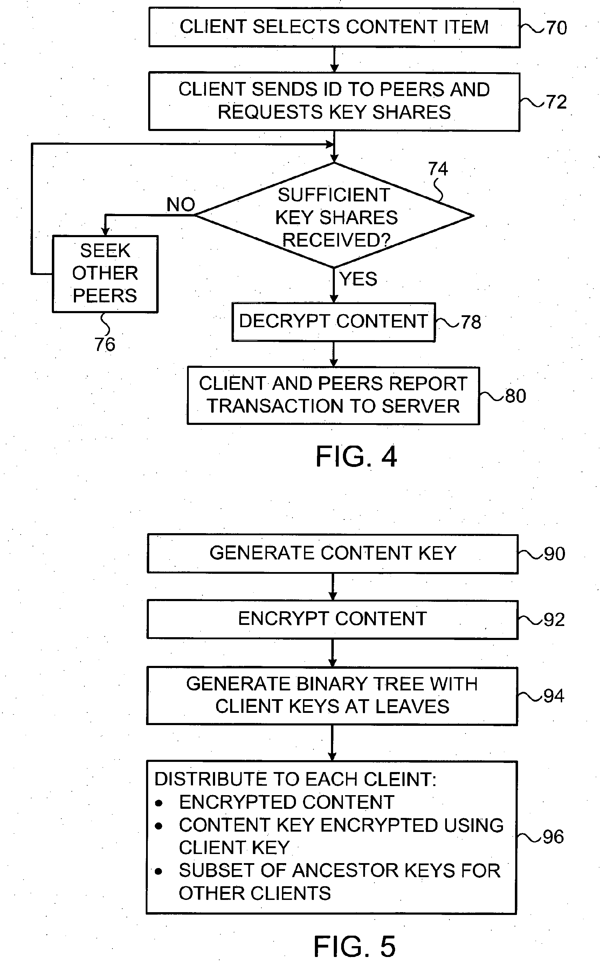

Fig. 4 is a flow chart that schematically illustrates a method for decrypting encrypted content using key-shares, in accordance with an embodiment of the present invention. The method is described, for the sake of clarity, with reference to clients 34, 36 and 38, as shown in Fig. 1, but it may similar be carried out over any group containing a sufficient number of clients (two or more) for the collaboration.

Client 34 selects an item Cᵢ to decrypt and play, at an item selection step 70. This client establishes local communications with peer clients 36 and/or 38 and requests that these clients provide their respective sets of secret-shares for the selected item, at a collaboration request step 72. Client 34 furnishes its identifier 46 with the request or in a subsequent communication, and clients 36, 38 may similarly identify themselves. The participating clients may use zero-knowledge proof methods, such as the above-mentioned Fiat-Shamir proof, to prove to one another that they hold certain secret-shares, or they may present certificates to this effect that are signed by server 21. Once clients 36, 38 have validated the identifier and secret-shares provided by client 34, they may transmit their own secret-shares to client 34.

Client 34 evaluates the secret-shares that it has received to determine whether they are sufficient to reconstruct the key Sᵢ, at a share evaluation step 74. If the number of different shares is insufficient, client 34 may continue to seek other clients to supply the missing secret-shares, at a peer seeking step 76. Once client 34 has assembled a sufficient number of secret-shares, it reconstructs Sᵢ, using the appropriate method of reconstruction (such as the interpolation-based method described above in the Background section), and then decrypts the encrypted item E_{Si}(Cᵢ) using Sᵢ, at a decryption step 78.

Client 34 and collaborating clients 36, 38 report the collaborative transaction to server 21, at a reporting step 80. The report may include, for each transaction, the identities of the other clients involved, the information item in question, the numbers of secret-shares exchanged, and the time of the transaction. The clients may also provide the server with a list of the secret-shares that they current hold for each item Cᵢ. In this manner, assuming all of the clients are operating properly and have not been hacked, server 21 will receive several reports of the transaction and may cross-check them for verification and record the transaction accordingly. Furthermore, even if one of the clients fails to report the transaction, the server will still receive at least one report and will be able to make the appropriate record.

Fig. 5 is a flow chart that schematically illustrates a method for distributing encrypted content and key-shares, in accordance with another embodiment of the present invention. In this embodiment, the key-shares are generated using a binary tree, in which each client has a respective client key that is associated with a respective leaf of the tree, and the key-shares are associated with ancestor nodes in the tree. The key-share or key at each node of the tree is derivable from its respective ancestor node using predetermined one-way functions. This cryptographic approach shares some features with methods of broadcast encryption that are described (for different purposes) in the references cited above in the Background section.

In the present embodiment, the key-share that is distributed to each client is associated with an ancestor node that is not one of the ancestor nodes of the leaf that is associated with the respective client key of the client. Therefore, any given client must find at least one collaborating client in order to receive an ancestor-node key that will enable the given client to derive its own client key.

To apply the method of Fig. 5, server 21 may generate a respective content key Sᵢ for each information item Cᵢ, at a content key generation step 90. The server encrypts Cᵢ using Sᵢ to generate the encrypted item E_{Si}(Cᵢ), at an encryption step 92. For each information item, server 21 also generates a balanced binary tree, with a leaf corresponding to each client to which E_{Si}(Cᵢ) is to be distributed, at a tree generation step 94. The tree has some root value Ko and two one-way functions, HL and HR. For a given node X, the values at its left and right child nodes are given by HL(X) and HR(X), respectively. The values at all the nodes of the binary tree, down to the leaves, are computed by repeated application of these one-way functions. For each item Cᵢ, each client j is thus assigned a respective leaf and client key TKᵢⱼ.

Server 21 distributes encrypted item E_{Si}(Cᵢ) and key-shares to clients 34, 36, 38, ..., at a distribution step 96. For each client j, the server encrypts the content key Sᵢ using the respective client key TKᵢⱼ in a symmetric encryption algorithm (such as AES), thus computing the encrypted content key value E_{i,TKij} (Sᵢ), and transmits this value to the client. The server also distributes to each client one or more key-shares, corresponding to the values at certain nodes in the binary tree, but not from any of the ancestor nodes of the client's own client key TKᵢⱼ.

Clients 34, 36, 38, ..., interact and exchange key-shares in this embodiment in a manner similar to that described above with reference to Fig. 4: In order to decrypt and play Cᵢ, client 34 seeks other clients that hold key-shares corresponding to ancestor nodes of the client key assigned to client 34. After finding such a client, exchanging identification information, and receiving that client's key-share, client 34 computes its own client key value TKᵢⱼ by applying the appropriate one-way functions, HL and HR. Client 34 uses TKᵢⱼ to decrypt the encrypted content key value E_{i,TKij} (Sᵢ), and then uses Sᵢ to decrypt E_{Si}(Cᵢ) so as to play Cᵢ. Clients 34, 36, 38, ..., report the transaction to server 21 in the manner described above.

To encourage clients to correctly and honestly report the transactions in which they took part, server 21 may reward honest clients by providing them with more key-shares for new items of content, or with additional key-shares for items of content that they have not yet consumed. This approach will make it easier for such clients to consume content off-line, as well as involving them in more transactions with other devices. An especially honest client may even receive enough secrets to enable it to consume some off-line content without the need to cooperate with other devices.

Furthermore, when the overall level of reporting in a given client group or in system 20 as a whole is high, server 21 can provide all clients with a higher average number of key-shares, thus increasing the level of cooperation and availability of the off-line purchase option. When the overall level of reporting is low, on the other hand, server 21 may decrease the number of key-shares it provides to clients, thus curtailing the off-line purchase option.

It will be appreciated that the embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

## Claims

1. A method for distributing information, comprising:
distributing an item of encrypted information to a plurality of clients;
distributing respective key-shares to the clients, such that each client will require a key-share that has been distributed to at least one other client in order to reconstruct a key for decrypting the encrypted information (66);
receiving from a first client a report that a second client requested and received a respective one of the key-shares from the first client (80); and
responsively to the report, making a record of a delivery of the item to the second client.

2. The method according to claim 1, wherein distributing the key-shares comprises generating and distributing respective secret-shares to the clients, such that a predetermined number of no less than two of the secret-shares are required in order to reconstruct a key to decrypt the encrypted information.

3. The method according to claim 1, wherein distributing the key-shares comprises generating a binary tree, such that the key-shares are associated with respective ancestor nodes in the tree, and each client has a respective client key associated with a respective leaf of the tree, which is derivable from the ancestor nodes by a predetermined one-way function, and
wherein the key-share distributed to each client is not associated with an ancestor node of the respective leaf that is associated with the respective client key of the client.

4. The method according to any of claims 1-3, wherein receiving the report comprises receiving a message from the first client over a communication network, indicating that the respective one of the key-shares was requested and transmitted to the second client while the first client was disconnected from the communication network.

5. The method according to any of claims 1-4, wherein making the record comprises verifying that the second client also reported that the item was delivered to the second client.

6. The method according to any of claims 1-5, and comprising providing an incentive to the first client for providing the report.

7. A method for processing information, comprising:
receiving at a first client an item of encrypted information distributed to a plurality of clients;
receiving at the first client a given key-share from among multiple, respective key shares distributed to the clients, such that each client requires a key-share that has been distributed to at least one other client in order to reconstruct a key for decrypting the encrypted information (66);
receiving at the first client a request from a second client to convey the first key-share from the first client to the second client (72); and
responsively to the request, conveying the given key-share from the first client to the second client and reporting to a server that the given key-share has been conveyed to the second client (80).

8. The method according to claim 7, wherein receiving the given key-share comprises receiving at least one secret-share computed such that a predetermined number of no less than two of the secret-shares are required in order to reconstruct a key to decrypt the encrypted information.

9. The method according to claim 8, and comprising transmitting requests from the first client to one or more other clients to provide the secret-shares that the other clients received, and upon receiving the secret-shares from the one or more other clients, determining at the first client whether the predetermined number of the secret-shares has been received and, if so, decrypting the encrypted information.

10. The method according to claim 7, wherein the key-shares are associated with respective ancestor nodes in a binary tree, and each of the plurality of the clients has a respective client key associated with a respective leaf of the tree, which is derivable from the ancestor nodes by a predetermined one-way function, and
wherein the given key-share is not associated with an ancestor node of the respective leaf that is associated with the client key of the first client.

11. The method according to any of claims 7-10, wherein reporting to the server comprises transmitting a message from the first client to the server over a wide-area communication network, and wherein conveying the first key-share comprises transmitting the given key-share from the first client to the second client over a local communication link, independent of the wide-area communication network, between the first and second clients.

12. The method according to any of claims 7-11, wherein receiving the request comprises receiving at the first client an authenticated identification of the second client, which is used by the first client in reporting to the server.

13. The method according to any of claims 7-12, wherein conveying the given key-share comprises exchanging the given key-share for another key-share conveyed from the second client to the first client.

14. Apparatus for distributing information, comprising:
a communication interface (23); which is configured to be coupled to a communication network so as to distribute, over the network, an item of encrypted information to a plurality of clients and to distribute over the network respective key-shares to the clients, such that each client will require a key-share that has been distributed to at least one other client in order to reconstruct a key for decrypting the encrypted information; and
a processor (22); which is configured to receive over the communication network from a first client a report that a second client requested and received a respective one of the key-shares from the first client, and to make a record of a delivery of the item to the second client responsively to the report.

15. Apparatus configured to operate as a first client, the apparatus comprising:
a communication interface (54); which is configured to receive an item of encrypted information distributed over a network to a plurality of clients and to receive a given key-share from among multiple, respective key shares distributed to the clients, such that each client requires a key-share that has been distributed to at least one other client in order to reconstruct a key for decrypting the encrypted information; and
a processor (40); which is configured to receive a request from a second client to convey the given key-share to the second client and responsively to the request, to convey the given key-share to the second client and to report to a server that the given key-share has been conveyed to the second client.

## Patentansprüche

1. Verfahren zum Verteilen von Information, umfassend:
Verteilen eines Elements verschlüsselter Information an eine Vielzahl von Clients;
Verteilen jeweiliger Schlüsselanteile an die Clients, so dass jeder Client einen Schlüsselanteil benötigt, der an mindestens einen anderen Client verteilt worden ist, um einen Schlüssel zum Entschlüsseln der verschlüsselten Information zu rekonstruieren (66);
Empfangen einer Meldung von einem ersten Client, dass ein zweiter Client einen jeweiligen der Schlüsselanteile vom ersten Client angefordert und empfangen hat (80); und
als Antwort auf die Meldung, Anlegen eines Datensatzes einer Zustellung des Elements an den zweiten Client.

2. Verfahren nach Anspruch 1, worin das Verteilen der Schlüsselanteile umfasst: Erzeugen und Verteilen jeweiliger Geheimnisanteile an die Clients, so dass eine vorbestimmte Anzahl von nicht weniger als zwei der Geheimnisanteile benötigt wird, um einen Schlüssel zu rekonstruieren, um die verschlüsselte Information zu entschlüsseln.

3. Verfahren nach Anspruch 1, worin das Verteilen der Schlüsselanteile umfasst: Erzeugen eines Binärbaums, so dass die Schlüsselanteile jeweiligen Vorfahrknoten in dem Baum zugeordnet werden und jeder Client einen jeweiligen Clientschlüssel hat, der einem jeweiligen Blatt des Baums zugeordnet ist, welcher aus den Vorfahrknoten durch eine vorbestimmte Einwegfunktion ableitbar ist, und
worin der an jeden Client verteilte Schlüsselanteil nicht einem Vorfahrknoten des jeweiligen Blattes zugeordnet ist, das dem jeweiligen Clientschlüssel des Clients zugeordnet ist.

4. Verfahren nach einem der Ansprüche 1 bis 3, worin das Empfangen der Meldung umfasst: Empfangen einer Nachricht vom ersten Client über ein Kommunikationsnetzwerk, die besagt, dass der jeweilige der Schlüsselanteile angefordert und zum zweiten Client übertragen wurde, während der erste Client vom Kommunikationsnetzwerk getrennt war.

5. Verfahren nach einem der Ansprüche 1 bis 4, worin das Anlegen des Datensatzes umfasst: Verifizieren, dass der zweite Client ebenfalls meldete, dass das Element dem zweiten Client zugestellt wurde.

6. Verfahren nach einem der Ansprüche 1 bis 5 und umfassend: Bereitstellen einer Prämie für den ersten Client für das Bereitstellen der Meldung.

7. Verfahren zur Verarbeitung von Information, umfassend:
Empfangen eines Elements verschlüsselter Information, das an eine Vielzahl von Clients verteilt wurde, in einem ersten Client;
Empfangen eines gegebenen Schlüsselanteils aus mehreren jeweiligen Schlüsselanteilen, die an die Clients verteilt wurden, im ersten Client, so dass jeder Client einen Schlüsselanteil benötigt, der an mindestens einen anderen Client verteilt worden ist, um einen Schlüssel zum Entschlüsseln der verschlüsselten Information zu rekonstruieren (66);
Empfangen einer Anforderung von einem zweiten Client, den ersten Schlüsselanteil vom ersten Client zum zweiten Client zu befördern (72); und
als Antwort auf die Anforderung, Befördern des gegebenen Schlüsselanteils vom ersten Client zum zweiten Client und Melden an einen Server, dass der gegebene Schlüsselanteil zum zweiten Client befördert worden ist (80).

8. Verfahren nach Anspruch 7, worin das Empfangen des gegebenen Schlüsselanteils umfasst: Empfangen mindestens eines Geheimnisanteils, der so berechnet wurde, dass eine vorbestimmte Anzahl von nicht weniger als zwei der Geheimnisanteile benötigt wird, um einen Schlüssel zu rekonstruieren, um die verschlüsselte Information zu entschlüsseln.

9. Verfahren nach Anspruch 8 und umfassend: Übertragen von Anforderungen vom ersten Client an einen oder mehrere andere Clients, die Geheimnisanteile bereitzustellen, welche die anderen Clients empfangen haben, und bei Empfang der Geheimnisanteile von dem einen oder den mehreren anderen Clients, Bestimmen im ersten Client, ob die vorbestimmte Anzahl der Geheimnisanteile empfangen worden ist, und wenn ja, Entschlüsseln der verschlüsselten Information.

10. Verfahren nach Anspruch 7, worin die Schlüsselanteile jeweiligen Vorfahrknoten in einem Binärbaum zugeordnet sind und jeder aus der Vielzahl von Clients einen jeweiligen Clientschlüssel hat, der einem jeweiligen Blatt des Baums zugeordnet ist, welcher aus den Vorfahrknoten durch eine vorbestimmte Einwegfunktion ableitbar ist, und
worin der gegebene Schlüsselanteil nicht einem Vorfahrknoten des jeweiligen Blattes zugeordnet ist, das dem Clientschlüssel des ersten Clients zugeordnet ist.

11. Verfahren nach einem der Ansprüche 7 bis 10, worin das Melden an den Server umfasst: Übertragen einer Nachricht vom ersten Client zum Server über ein Weitverkehrs-Kommunikationsnetzwerk, und worin das Befördern des ersten Schlüsselanteils umfasst: Übertragen des gegebenen Schlüsselanteils vom ersten Client zum zweiten Client über eine vom Weitverkehrs-Kommunikationsnetzwerk unabhängige lokale Kommunikationsverbindung zwischen dem ersten und dem zweiten Client.

12. Verfahren nach einem der Ansprüche 7 bis 11, worin das Empfangen der Anforderung umfasst: Empfangen einer authentifizierten Identifizierung des zweiten Clients im ersten Client, die durch den ersten Client beim Melden an den Server verwendet wird.

13. Verfahren nach einem der Ansprüche 7 bis 12, worin das Befördern des gegebenen Schlüsselanteils umfasst: Vertauschen des gegebenen Schlüsselanteils mit einem anderen Schlüsselanteil, der vom zweiten Client zum ersten Client befördert wurde.

14. Vorrichtung zum Verteilen von Information, umfassend:
eine Kommunikationsschnittstelle (23), die dafür konfiguriert ist, mit einem Kommunikationsnetzwerk gekoppelt zu werden, um dadurch über das Netzwerk ein Element verschlüsselter Information an eine Vielzahl von Clients zu verteilen und über das Netzwerk jeweilige Schlüsselanteile an die Clients zu verteilen, so dass jeder Client einen Schlüsselanteil benötigt, der an mindestens einen anderen Client verteilt worden ist, um einen Schlüssel zum Entschlüsseln der verschlüsselten Information zu rekonstruieren; und
einen Prozessor (22), der dafür konfiguriert ist, über das Kommunikationsnetzwerk eine Meldung von einem ersten Client zu empfangen, dass ein zweiter Client einen jeweiligen der Schlüsselanteile vom ersten Client angefordert und empfangen hat; und als Antwort auf die Meldung einen Datensatz einer Zustellung des Elements an den zweiten Client anzulegen.

15. Vorrichtung, die dafür konfiguriert ist, als ein erster Client zu arbeiten, wobei die Vorrichtung umfasst:
eine Kommunikationsschnittstelle (54), die dafür konfiguriert ist, ein Element verschlüsselter Information zu empfangen, das über ein Netzwerk an eine Vielzahl von Clients verteilt wurde, und einen gegebenen Schlüsselanteil aus mehreren jeweiligen Schlüsselanteilen zu empfangen, die an die Clients verteilt wurden, so dass jeder Client einen Schlüsselanteil benötigt, der an mindestens einen anderen Client verteilt worden ist, um einen Schlüssel zum Entschlüsseln der verschlüsselten Information zu rekonstruieren; und
einen Prozessor (40), der dafür konfiguriert ist, eine Anforderung von einem zweiten Client zu empfangen, den gegebenen Schlüsselanteil zum zweiten Client zu befördern, und als Antwort auf die Anforderung den gegebenen Schlüsselanteil zum zweiten Client zu befördern und einem Server zu melden, dass der gegebene Schlüsselanteil zum zweiten Client befördert worden ist.

## Revendications

1. Procédé permettant de distribuer des informations, comprenant les étapes consistant à :
distribuer un élément d'informations cryptées auprès d'une pluralité des clients ;
distribuer des parts de clé respectives auprès desdits clients, de telle manière que chaque client va demander une part de clé qui a été distribuée auprès d'au moins un autre client afin de reconstruire une clé permettant de décrypter les informations cryptées (66) ;
recevoir d'un premier client un signalement selon lequel un second client a demandé et reçu une part de clé respective parmi les parts de clé en provenance du premier client (80) ; et
en réaction au signalement, réaliser un enregistrement d'une livraison de l'élément au second client.

2. Procédé selon la revendication 1, dans lequel l'étape de distribution des parts de clé comprend une étape consistant à générer et distribuer des parts secrètes respectives auprès des clients, de telle manière qu'un nombre prédéterminé de deux ou plus de deux des parts secrètes sont demandées afin de reconstruire une clé permettant de décrypter les informations cryptées.

3. Procédé selon la revendication 1, dans lequel l'étape de distribution des parts de clé comprend une étape consistant à générer un arbre binaire, de telle manière que les parts de clé sont associées à des noeuds ancêtres respectifs de l'arbre, et chaque client présente une clé de client respective associée à une feuille respective de l'arbre, qui peut être dérivée des noeuds ancêtres grâce à une fonction unidirectionnelle prédéterminée, et
dans lequel la part de clé distribuée auprès de chaque client n'est pas associée à un noeud ancêtre de la feuille respective qui est associée à la clé de client respective du client.

4. Procédé selon l'une quelconque des revendications 1 à 3, dans lequel l'étape de réception du signalement comprend une étape consistant à recevoir un message en provenance du premier client par l'intermédiaire d'un réseau de communication, ledit message indiquant que la part de clé respective parmi les parts de clé a été demandée et transmise au second client pendant que le premier client était déconnecté du réseau de communication.

5. Procédé selon l'une quelconque des revendications 1 à 4, dans lequel l'étape de réalisation de l'enregistrement comprend une étape consistant à vérifier que le second client a également signalé que ledit élément a été livré au second client.

6. Procédé selon l'une quelconque des revendications 1 à 5, comprenant une étape consistant à fournir au premier client une incitation à fournir le signalement.

7. Procédé permettant de traiter des informations, comprenant les étapes consistant à :
recevoir, au niveau d'un premier client, un élément d'informations cryptées distribué auprès d'une pluralité de clients ;
recevoir, au niveau du premier client, une part de clé donnée parmi plusieurs parts de clé respectives distribuées auprès des clients, de telle manière que chaque client demande une part de clé qui a été distribuée auprès d'au moins un autre client afin de reconstruire une clé permettant de décrypter les informations cryptées (66) ;
recevoir, au niveau du premier client, une demande d'un second client d'acheminer la première part de clé du premier client vers le second client (72) ; et
en réaction à la demande, acheminer la part de clé donnée du premier client vers le second client et signaler à un serveur que la part de clé donnée a été acheminée vers le second client (80).

8. Procédé selon la revendication 7, dans lequel l'étape de réception de la part de clé donnée comprend une étape consistant à recevoir au moins une part secrète calculée de telle manière qu'un nombre prédéterminé de deux ou plus de deux parmi des parts secrètes sont demandées afin de reconstruire une clé permettant de décrypter les informations cryptées.

9. Procédé selon la revendication 8, comprenant une étape consistant à transmettre des demandes du premier client vers un ou plusieurs autres clients afin de fournir les parts secrètes que les autres clients ont reçues, et, dès réception des parts secrètes en provenance du ou des autres client(s), déterminer au niveau du premier client si le nombre prédéterminé de parts secrètes ont été reçues et, si c'est le cas, décrypter les informations cryptées.

10. Procédé selon la revendication 7, dans lequel les parts de clé sont associées à des noeuds ancêtres respectifs d'un arbre binaire, et chaque client parmi la pluralité des clients présente une clé de client respective associée à une feuille respective de l'arbre, qui peut être dérivée des noeuds ancêtres grâce à une fonction unidirectionnelle prédéterminée, et
dans lequel la part de clé donnée n'est pas associée à un noeud ancêtre de la feuille respective qui est associée à la clé de client du premier client.

11. Procédé selon l'une quelconque des revendications 7 à 10, dans lequel l'étape de fourniture de signalement au serveur comprend une étape consistant à transmettre un message du premier client vers le serveur par l'intermédiaire d'un réseau de communication à grande distance, et dans lequel l'étape d'acheminement de la première part de clé comprend une étape consistant à transmettre la part de clé donnée du premier client vers le second client par l'intermédiaire d'un lien de communication local, indépendant du réseau de communication à grande distance, entre les premier et second clients.

12. Procédé selon l'une quelconque des revendications 7 à 11, dans lequel l'étape de réception de la demande comprend une étape consistant à recevoir, au niveau du premier client, une identification authentifiée du second client, qui est utilisée par le premier client pour signaler au serveur.

13. Procédé selon l'une quelconque des revendications 7 à 12, dans lequel l'étape d'acheminement de la part de clé donnée comprend une étape consistant à échanger la part de clé donnée avec une autre part de clé acheminée du second client vers le premier client.

14. Appareil permettant de distribuer des informations, comprenant :
une interface de communication (23) qui est configurée pour être couplée à un réseau de communication de manière à distribuer, par l'intermédiaire dudit réseau, un élément d'informations cryptées auprès d'une pluralité de clients et à distribuer, par l'intermédiaire du réseau, des parts de clé respectives auprès des clients, de telle manière que chaque client va demander une part de clé qui a été distribuée auprès d'au moins un autre client afin de reconstruire une clé permettant de décrypter les informations cryptées ; et
un processeur (22) qui est configuré pour recevoir, par l'intermédiaire du réseau de communication et en provenance d'un premier client, un signalement selon lequel un second client a demandé et reçu une part de clé respective parmi les parts de clé en provenance du premier client, et pour réaliser un enregistrement d'une livraison de l'élément auprès du second client en réaction audit signalement.

15. Appareil configuré pour fonctionner en tant que premier client, l'appareil comprenant :
une interface de communication (54), qui est configurée pour recevoir un élément d'informations cryptées distribué par l'intermédiaire d'un réseau auprès d'une pluralité de clients et pour recevoir une part de clé donnée parmi plusieurs parts de clé respectives distribuées auprès des clients, de telle manière que chaque client demande une part de clé qui a été distribuée auprès d'au moins un autre client afin de reconstruire une clé permettant de décrypter les informations cryptées ; et
un processeur (40), qui est configuré pour recevoir, de la part d'un second client, une demande d'acheminer la part de clé donnée vers le second client et, en réponse à la demande, pour acheminer la part de clé donnée vers le second client et pour signaler à un serveur que la part de clé donnée a été acheminée vers le second client.
